# EUROPÄISCHE PATENTSCHRIFT

(11) **EP 0 603 552 B1**
(45) Veröffentlichungstag und Bekanntmachung des Hinweises auf die Patenterteilung: **21.10.1998**
(21) Anmeldenummer: 93118707.4
(22) Anmeldetag: 22.11.1993
(51) Int. Cl.: B23D 49/16, B23D 59/00

(54) **Handwerkzeugmaschine mit winkelverstellbarer Fussplatte**
Powered handtool with angularly adjustable base plate
Outil à main motorisé ayant une plaque-support ajustable angulairement

(30) Priorität: 24.12.1992 DE 4244079
(43) Veröffentlichungstag der Anmeldung: 29.06.1994
(73) Patentinhaber: SCINTILLA AG, CH-4500 Solothurn (CH)
(72) Erfinder: Käch, Beat, CH-4528 Zuchwil (CH); Simm, Robert, CH-4528 Zuchwil (CH); Gentinetta, René, CH-4528 Zuchwil (CH)
(74) Vertreter: Voss, Klaus, Dipl.-Ing.

(56) Entgegenhaltungen:
- EP-A- 0 297 711
- WO-A-88/07906
- WO-A-89/08524
- US-A- 3 087 519
- US-A- 4 628 605

## Beschreibung

### Stand der Technik

Die Erfindung geht aus von einer Handwerkzeugmaschine nach dem Oberbegriff des Anspruchs 1. Aus der WO 88/07906 (= EP 396 540) ist bereits eine solche Stichsäge bekannt, die zum Anklemmen der Fußplatte eine Klemmvorrichtung mit Schraubrad aufweist. Die notwendige Klemmkraft läßt sich über dieses Schraubrad manuell jedoch nur aufbringen, wenn sein Außendurchmesser sehr groß gewählt wird. Ein großer Außendurchmesser des Schraubrades würde jedoch einem Verschwenken der Fußplatte zum Gehrungssägen entgegenstehen. Zumindest könnten dann nur noch geringe Gehrungswinkel eingestellt werden. Hinzu kommt, daß in diesem Fall das Schraubrad nur noch von einer Seite, also nur noch eingeschränkt, zugänglich wäre.

Durch die US-A-3,087,519 ist eine Stichsäge bekannt, deren Fußplatte gegenüber dem Sägengehäuse verschwenkbar angeordnet ist, wobei zum Arretieren bzw. Lösen der Fußplatte aus ihrer jeweiligen Winkelposition gegenüber dem Sägengehäuse ein seitlich aus diesem herausschwenkbarer Hebel angeordnet ist, der in seiner herausgeschwenkten Position die Fußplatte gegenüber dem Stichsägengehäuse freigibt, so daß deren Position verstellt werden kann. In seiner zum Gehäuse hingeschwenkten Position bestimmt der Hebel die Klemmstellung der Fußplatte gegenüber dem Sägengehäuse.

Diese Klemmvorrichtung ist einfach und robust, jedoch ist das Ende des Hebels verhältnismäßig nahe am Sägeblatt positioniert, so daß für den Bedienenden eine nicht unbeachtliche Verletzungsgefahr besteht, insbesondere wenn die Fußplatte bei in Betrieb befindlicher Stichsäge verstellt wird. Außerdem ist der schwenkbar zu verstellende Hebel sperrig und ragt in seiner Löseposition in den Schwenkbereich der Fußplatte, so daß er dabei unter Umständen ein Verstellen der Fußplatte behindert.

### Vorteile der Erfindung

Die erfindungsgemäße Handwerkzeugmaschine mit den kennzeichnenden Merkmalen des Anspruchs 1 hat demgegenüber den Vorteil, daß das Lösen und Festlegen der Fußplatte in bequemer Weise manuell ohne Zuhilfenahme von Werkzeug möglich wird. Gleichzeitig bleibt der Hohlraum zwischen Fußplattensohle und Motorgehäuse frei für eine Absaugvorrichtung. Insbesondere sind keine Durchbrüche zur Handhabung der Klemmvorrichtung notwendig.

Besonders vorteilhaft für eine manuelle Bedienung ist die Ausbildung der Handhabe als Drehgriff an einer frei zugänglichen Gehäusefläche auf der rückwärtigen, dem Werkzeug fernliegenden Seite. Die Anordnung der Achse des Drehgriffs, senkrecht zur Gehäuseoberfläche hat den Vorzug, daß der Griff stets frei zugänglich bleibt.

Durch die in den abhängigen Ansprüchen aufgeführten Maßnahmen sind vorteilhafte Weiterbildungen und Verbesserungen der im Anspruch 1 angegebenen Handwerkzeugmaschine möglich. Besonders vorteilhaft ist es, wenn zwischen Klemmvorrichtung und Handhabe eine das übertragbare Drehmoment begrenzende Überrastkupplung angeordnet ist. Um ein manuelles Lösen der Klemmvorrichtung in jedem Falle zu ermöglichen, ist die Überrastkupplung vorteilhafterweise asymmetrisch ausgebildet, sodaß in Löserichtung ein größeres Moment übertragbar ist als beim Anziehen der Klemmvorrichtung.

### Zeichnung

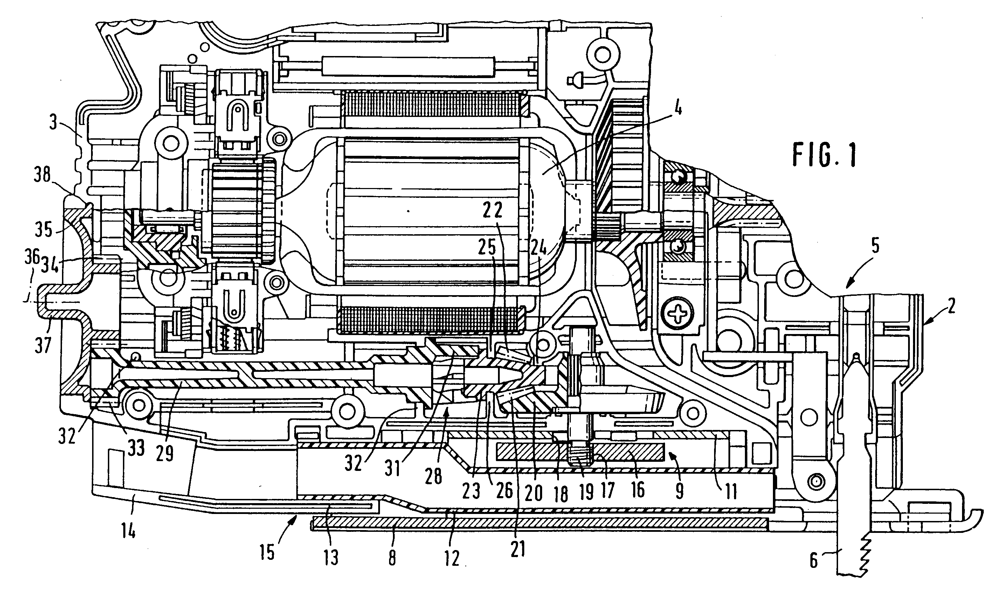

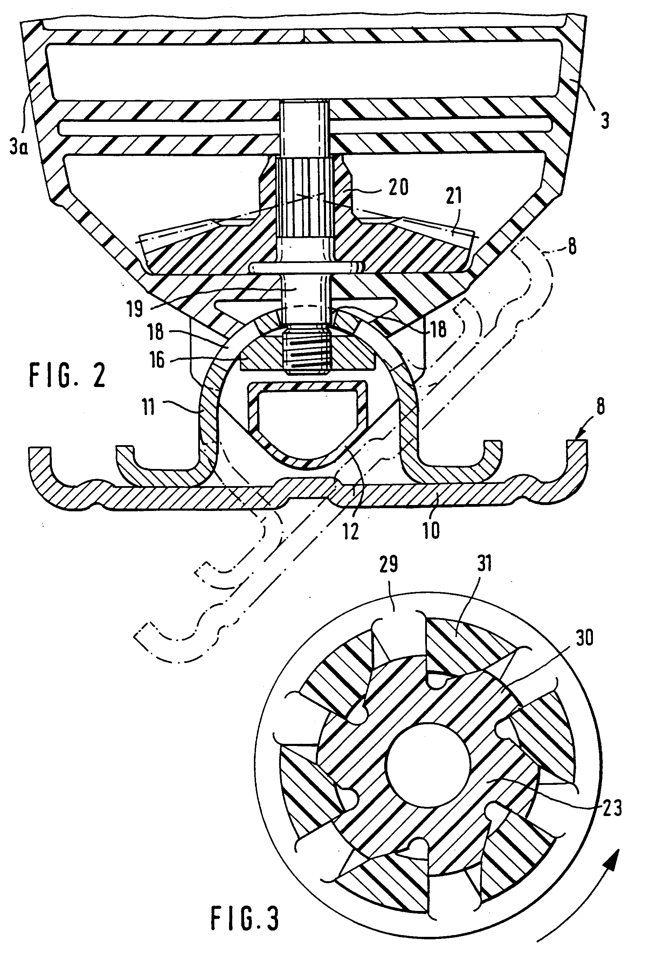

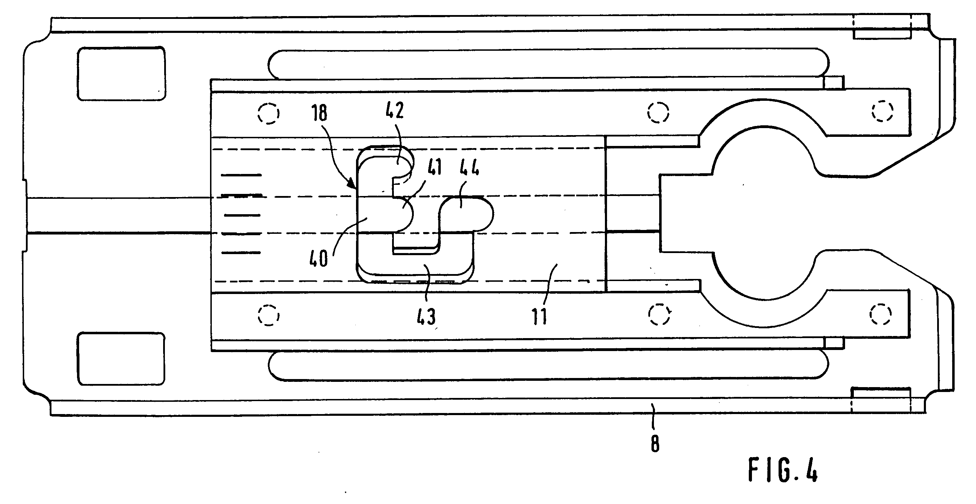

Ein Ausführungsbeispiel der Erfindung ist in der Zeichnung dargestellt und in der nachfolgenden Beschreibung näher erläutert. Figur 1 zeigt einen Längsschnitt durch eine Stichsäge und Figur 2 einen Querschnitt in Höhe der Klemmvorrichtung gemäß Linie II in Figur 1. Figur 3 zeigt einen Querschnitt durch eine Überrastkupplung und Figur 4 eine Draufsicht auf die Fußplatte.

### Beschreibung des Ausführungsbeispiels

Eine als Stichsäge ausgebildete Handwerkzeugmaschine weist ein zweischaliges Motorgehäuse 2 auf, von dem in Figur 1 eine Gehäuseschale 3 gezeigt ist. In diese Gehäuseschale sind Motor 4 und Getriebeteile 5 zum Antrieb eines vorn liegenden Sägeblattes 6 eingelegt. An das Motorgehäuse 2 ist weiterhin ein nicht gezeigter Handgriff angeformt.

Unten an das Motorgehäuse 2 ist eine Fußplatte 8 mittels einer Klemmvorrichtung 9 angebracht. Die Fußplatte 8 weist eine im wesentlichen ebene Sohle 10 zur Auflage auf ein Werkstück auf. Mit der Sohle 10 ist ein hohl ausgebildeter Tragbügel 11 mit zum Motorgehäuse 2 hin halbzylindrisch gewölbter Oberfläche verbunden. In den Tragbügel 11 ist ein vorzugsweise aus Kunststoff gefertigtes Absaugrohr 12 eingesetzt. Das Absaugrohr 12 mündet vorn kurz hinter dem Sägeblatt 6 und ist mit seinem hinteren Ende in einen Stutzen 13 des Motorgehäuses 2 eingesteckt. In Verlängerung des Stutzens 13 weist das Motorgehäuse 2 eine Einstecköffnung 14 zum Einstecken eines mit einem Sauggebläse zu verbindenden, nicht gezeigten Absaugschlauches. Die Teile 12 - 14 bilden zusammen eine Absaugvorrichtung 15 zur Entfernung der beim Sägen anfallenden Späne.

Die Klemmvorrichtung 9 besteht aus einer Klemmplatte 16, die innerhalb des Tragbügels 11 liegt und ein Gewinde 17 aufweist. In dieses greift ein mit Gegengewinde versehenes, einen Durchbruch 18 im Tragbügel 11 durchgreifendes Schraubteil 19 eines Tellerrades 20. Das Schraubteil 19 ist als metallene Achse 19 ausgebildet und oberhalb und unterhalb des Tellerrads 20 im Motorgehäuse 2 gelagert. Das Tellerrad 20 besteht aus Kunststoff und ist auf die Achse 19 aufgespritzt. Statt des Schraubteils 19 kann wahlweise auch ein Gewindeteil der Klemmplatte 16 den Durchbruch 18 durchgreifen.

Das Tellerrad trägt eine Kegelverzahnung 21, die mit einer Kegelverzahnung 22 eines Ritzels 23 kämmt. Die Kegelverzahnungen 21/22 sind so gewählt, daß ein Untersetzungsverhältnis von etwa 4:1 zwischen Tellerrad 20 und Ritzel 23 zustandekommt. Die Achse des Ritzels 23 steht senkrecht zur Achse 19 des Tellerrades 20. Das Ritzel 23 wird von Stegen 24 - 26 im Motorgehäuse 2 gehalten.

Die Betätigungselemente zum Anziehen und Lösen der Klemmvorrichtung 9 weisen eine Überrastkupplung 28 auf. Im Ausführungsbeispiel ist sie zwischen dem Ritzel 23 und einem wellenförmigen Übertragungsglied 29 angeordnet. Dazu weist das Ritzel 23 an seinem der Kegelverzahnung 22 entgegengesetzten Ende in Figur 3 gezeigte asymmetrische Nocken 30 auf. Die Flankenwinkel der Nocken 30 sind so gewählt, daß die beim Öffnen in Pfeilrichtung belastete Flanke steil, insbesondere etwa radial ausgebildet ist, während die beim Anziehen der Klemmvorrichtung 9 belastete Flanke flacher, z. B. tangential zu einem Radius durch den Nockengrund, ausgebildet ist. In die Nocken 30 greifen federnde Rastglieder 31 ein, die die Form der Zahnzwischenräume zwischen den Nocken 30 aufweisen (vgl. Figur 3). Die Rastglieder 31 sind kronenartig am vorderen Ende des wellenförmigen Übertragungsglieds 29 angeordnet.

Das Übertragungsglied 29 ist im Motorgehäuse 2 an Stegen 32, ähnlich dem Ritzel 23, gelagert; am hinteren Ende trägt es eine Stirnverzahnung 33, die in eine Außenverzahnung 34 eines Drehgriffs 35 eingreift. Das Untersetzungsverhältnis der Verzahnungen 33/34 beträgt etwa 1,4:1. Der Drehgriff 35 dient als Handhabe und weist entlang einer Durchmesserlinie durch seine Achse 36 einen Steg 37 auf. Der Drehgriff 35 ist in die Gehäuseschale 3 eingelegt und wird von ihr am Umfang gehalten. Zur Sicherung gegen Herausfallen weist der Drehgriff einen radial vorstehenden Bund 38 auf.

In Figur 4 ist der Durchbruch 18 im Tragbügel 11 sichtbar. Er hat eine gegliederte Form, die einen ersten quer zur Längserstreckung der Fußplatte 8 verlaufenden Schlitz 40 aufweist. Dieser Schlitz weist in der Mitte eine Ausbuchtung 41 auf, in der das Schraubteil 19 bei Geradschnitten ohne Gehrung verläuft. Am Ende des Schlitzes 40 befindet sich seitlich eine weitere Ausbuchtung 42 für Gehrungsschnitte unter 45°. Diese Stellung der Fußplatte ist in Figur 2 gestrichelt eingezeichnet. In dem Schlitz 40 ist im übrigen jede andere Winkelstellung für Gehrungsschnitte zwischen 0° und 45° wahlweise rechts oder links einstellbar. Am der Ausbuchtung 42 gegenüberliegenden Ende des Schlitzes 40 schließt sich rechtwinkelig ein Durchgang 43 an, der in einen zweiten Schlitz 44 übergeht. Dieser dient dem randnahen Sägen. Liegt das Schraubteil 19 im Schlitz 44, so ist die Fußplatte 8 gegenüber dem Motorgehäuse 2 zurückversetzt. Die Ausbildung des Durchbruchs 18 ermöglicht die Festlegung der Fußplatte 8 in jeder gewünschten Stellung ohne das Schraubteil 19 aus dem Durchbruch 18 herausnehmen zu müssen.

Fußplatte 8 mit Absaugvorrichtung 15, Klemmvorrichtung 9 und die Betätigungselemente 23, 29 und 35 werden in vormontiertem Zustand in die Gehäuseschale 3 eingelegt. Durch Auflegen der zweiten Gehäuseschale 3a (siehe Figur 2) werden alle Teile in Ihrer Lage fixiert. Die Fußplatte 8 ist nach Montage der Stichsäge nicht mehr entnehmbar, sondern nur noch zum Verschwenken lösbar.

Zum Einstellen eines Gehrungswinkels wird die Fußplatte 8 gegenüber dem Motorgehäuse 2 durch Linksdrehen an dem Drehgriff 35 nur soweit gelöst, bis sie verschwenkbar ist. Sodann läßt sich die Fußplatte 8 gewissermaßen um das Absaugrohr 12 herum drehen. Durch Rechtsdrehen des Drehgriffs 35 wird die Fußplatte wieder festgeklemmt. Sobald das vorbestimmte Anziehmoment erreicht wird, werden die elastischen Rastglieder 31 des Übertragungsglieds 29 über die flache Flanke der Nocken 30 des Ritzels 23 nach außen gedrückt und überrasten; das Ritzel 23 bleibt stehen. Das mögliche Lösemoment ist wesentlich höher als das Anziehmoment, da die belasteten Flanken der Nocken 30 in diesem Falle radial ausgebildet sind.

Der maximal einstellbare Gehrungswinkel beträgt etwa 45°, wie dies in Figur 2 gestrichelt eingezeichnet ist. Die erforderliche Klemmkraft zur sicheren Fixierung der Fußplatte auch in rauhem Sägebetrieb läßt sich dank eines Untersetzungsverhältnisses von ca. 4:1 bis 8:1 der Betätigungselemente leicht von Hand aufbringen.

## Patentansprüche

1. Handwerkzeugmaschine mit einer an ihrem Motorgehäuse (2) verstellbar angeordneten Fußplatte (8) und mit spanabhebendem Werkzeug, insbesondere Stichsäge, die in dem Raum zwischen Motorgehäuse (2) und eine Fußplatte (8) eine Absaugvorrichtung (15) für Späne und Staub aufweist, und bei der die Fußplatte (8) mittels einer schraubbaren Klemmvorrichtung (9) verstellbar an dem Gehäuse (2) befestigt ist, wobei die Klemmvorrichtung (9) untersetzend mit einer von außen zugänglichen Handhabe (35) verbunden ist, dadurch gekennzeichnet, daß die Handhabe (35) als Drehgriff ausgebildet ist, dessen Achse (36) senkrecht zu einer frei zugänglichen Gehäusefläche angeordnet und ohne Werkzeug manuell bedienbar ist, welcher Drehgriff auf der rückwärtigen, dem Werkzeug fern liegenden Seite bündig in deren Kontur eingezogen angeordnet ist.

2. Handwerkzeugmaschine nach Anspruch 1, dadurch gekennzeichnet, daß die Betätigungsglieder (23, 29) eine Überrastkupplung (28) aufweisen, die das von der Handhabe (35) auf die Klemmvorrichtung (9) übertragbare Moment begrenzt.

3. Handwerkzeugmaschine nach Anspruch 2, dadurch gekennzeichnet, daß die Überrastkupplung (28) asymmetrisch ausgebildet ist, so daß das die Klemmvorrichtung (9) lösende Moment größer ist als das anziehende.

4. Handwerkzeugmaschine nach einem der vorhergehenden Ansprüche, dadurch gekennzeichnet, daß die Betätigungsglieder (20, 23, 29, 35) nahe der Fußplatte (8) unterhalb des Motors (4) im Motorgehäuse (2) der Maschine untergebracht sind.

5. Handwerkzeugmaschine nach einem der vorhergehenden Ansprüche, dadurch gekennzeichnet, daß die Fußplatte (8) einen Tragbügel (11) aufweist, in dem ein zu der Absaugeinrichtung (15) gehöriges Absaugrohr (12) untergebracht ist, das starr mit dem Motorgehäuse (2) verbunden ist.

6. Handwerkzeugmaschine nach einem der vorhergehenden Ansprüche 2 bis 5, dadurch gekennzeichnet, daß die Überrastkupplung (28) aus einem Ritzel (23) mit asymmetrischen Nocken (30) unterschiedlichen Flankenwinkels und damit zusammenwirkenden federnden Rastgliedern (31) besteht.

7. Handwerkzeugmaschine nach Anspruch 6, dadurch gekennzeichnet, daß das Ritzel (23) außer den asymmetrischen Nocken (30) eine weitere Verzahnung, insbesondere Kegelverzahnung (22) aufweist, die in ein zu der Klemmvorrichtung (9) gehörendes Tellerrad (20) eingreift.

8. Handwerkzeugmaschine nach einem der vorhergehenden Ansprüche, dadurch gekennzeichnet, daß die Klemmvorrichtung (9) eine die Fußplatte (8) an das Gehäuse (2) andrückende Klemmplatte (16) mit Gewinde (17) und ein damit zusammenarbeitendes Schraubteil (19) mit einem Tellerrad (20) aufweist.

9. Handwerkzeugmaschine nach Anspruch 6, dadurch gekennzeichnet, daß die Rastglieder (31) mit einem wellenförmigen Übertragungsglied (29) verbunden sind, das mit der Handhabe (35) in vorzugsweise untersetzendem Getriebeeingriff steht.

## Claims

1. Powered handtool, having a base plate (8), which is arranged in an adjustable manner on its motor casing (2), and having a chip-forming tool, in particular a compass saw, which in the space between the motor casing (2) and a base plate (8) has a suction device (15) for chips and dust, and in which the base plate (8) is attached to the casing (2) in an adjustable manner by means of a clamping device (9) with a screw thread, the clamping device (9) being connected in a reducing manner to an externally accessible handle (35), characterized in that the handle (35) is designed as a twist grip, the axis (36) of which is arranged perpendicular to a freely accessible casing surface and can be operated manually without using a tool, which twist grip is arranged on the rear side, which is remote from the tool, recessed flush into the contour of this side.

2. Powered handtool according to Claim 1, characterized in that the actuating members (23, 29) have a slipping clutch (28), which limits the moment which can be transmitted from the handle (35) to the clamping device (9).

3. Powered handtool according to Claim 2, characterized in that the slipping clutch (28) is of asymmetric design, so that the moment loosening the clamping device (9) is greater than the moment tightening it.

4. Powered handtool according to one of the preceding claims, characterized in that the actuating members (20, 23, 29, 35) are accommodated close to the base plate (8), beneath the motor (4), in the motor casing (2) of the tool.

5. Powered handtool according to one of the preceding claims, characterized in that the base plate (8) has a bearing bracket (11), in which there is accommodated a suction pipe (12) which belongs to the suction device (50) and is rigidly connected to the motor casing (2).

6. Powered handtool according to one of the preceding claims 2 to 5, characterized in that the slipping clutch (28) comprises a pinion (23) with asymmetric cams (30) of different flange angles and resilient latching members (31) which interact therewith.

7. Powered handtool according to Claim 6, characterized in that the pinion (23) has, in addition to the asymmetric cams (30), a further toothing, in particular a bevel toothing (22), which engages in a ring gear (20) belonging to the clamping device (9).

8. Powered handtool according to one of the preceding claims, characterized in that the clamping device (9) has a clamping plate (16), which presses the base plate (8) onto the casing (2) and has a screw thread (17), and a screw part (19) which interacts therewith and has a ring gear (20).

9. Powered handtool according to Claim 6, characterized in that the latching members (31) are connected to an undulating transmission member (29), which is in preferably reducing geared engagement with the handle (35).

## Revendications

1. Machine outil à main qui comprend une plaque de base (8), disposée de façon réglable sur son carter moteur (2), et un outil qui enlève des copeaux, en particulier une scie sauteuse, qui présente dans l'espace compris entre le carter du moteur (2) et la plaque de base (8) un dispositif d'aspiration (15) servant à aspirer les copeaux et la poussière, et dans laquelle la plaque de base (8) est fixée au moyen d'un dispositif de serrage (9) que l'on peut visser, sur le carter (2), le dispositif de serrage (9) étant relié avec démultiplication à une prise en main (35), qui est accessible de l'extérieur,
caractérisée en ce que
la prise en main (35) est constituée sous la forme d'une poignée tournante, dont l'axe (36) est disposé perpendiculairement à une face du carter librement accessible et peut être actionné manuellement sans outil, ladite poignée tournante étant disposée sur le côté arrière, qui se trouve éloigné de l'outil, en étant inséré à fleur dans son contour.

2. Machine outil à main selon la revendication 1,
caractérisée en ce que
les organes d'actionnement (23, 29) présentent un accouplement à encliquetage par dessus (28), qui limite le couple qui peut être transmis par la prise en main (35) au dispositif de serrage (9).

3. Machine outil à main selon la revendication 2,
caractérisée en ce que
l'accouplement à encliquetage par dessus (28) est constitué de telle sorte que le couple servant à desserrer le dispositif de serrage (9) soit plus grand que celui servant à le serrer.

4. Machine outil à main selon l'une des revendications précédentes,
caractérisée en ce que
les organes d'actionnement (20, 23, 29, 35)sont logés à proximité de la plaque de base (8) en dessous du moteur (4) dans le carter du moteur (2) de la machine.

5. Machine outil à main selon l'une des revendications précédentes,
caractérisée en ce que
la plaque de base (8) présente un étrier de support (11), dans lequel est logé un tuyau d'aspiration qui fait partie du dispositif d'aspiration (15), tuyau d'aspiration qui est relié de façon rigide au carter du moteur (2).

6. Machine outil à main selon l'une des revendications précédentes 2 à 5,
caractérisée en ce que
l'accouplement de transmission (28) consiste en un pignon (23) avec des cames dissymétriques (30)dont les flancs présentent des angles différents et avec des organes d'encliquetage (31),faisant ressort, qui coopèrent avec celles-ci.

7. Machine outil à main selon la revendication 6,
caractérisée en ce que
le pignon (23) présente en plus des cames dissymétriques (30) une autre denture, en particulier une denture conique (22), qui vient en prise dans une couronne (20) faisant partie du dispositif de serrage (9).

8. Machine outil à main selon l'une des revendications précédentes,
caractérisée en ce que
le dispositif de serrage (9) présente une plaque de serrage (16) avec un filetage (17), plaque de serrage qui presse la plaque de base (8) sur le boîtier (2), et une pièce filetée (19) avec une couronne (20), pièce filetée qui coopère avec les éléments précédents.

9. Machine outil à main selon la revendication 6,
caractérisée en ce que
les organes d'encliquetage (31) sont reliés à un organe de transmission (29) se présentant sous la forme d'un arbre, organe de transmission (29) qui est en liaison avec la prise en main (35) de préférence avec une démultiplication de la transmission.
